# EUROPEAN PATENT APPLICATION

(11) **EP 4 635 872 A1**
(43) Date of publication of application: **22.10.2025**
(21) Application number: 23903485.3
(22) Date of filing: 11.12.2023
(51) Int. Cl.: B65D 21/028, B29C 33/42, B29C 45/00, B29C 49/06, B29C 49/48, B65D 1/02

(54) **RESINOUS CONTAINER AND METHOD FOR MANUFACTURING RESINOUS CONTAINER**

(30) Priority: 12.12.2022 JP 2022197985
(71) Applicant: Nissei ASB Machine Co., Ltd., Komoro-shi, Nagano 384-8585 (JP)
(72) Inventor: OIKE Toshiteru, Komoro-shi, Nagano 384-8585 (JP)
(74) Representative: Novagraaf International SA
(86) International application number: PCT/JP2023/044265
(87) International publication number: WO 2024/128200

(57) **Abstract**

A resin container includes a neck portion forming an inlet-outlet portion for a liquid, a body portion connected to the neck portion, and a bottom portion connected to the body portion and configured to close an opening of the resin container. The body portion includes a facing surface that, in a case that the resin container is coupled to or separated from another resin container, faces the other resin container. The facing surface is provided with a coupling portion able to be coupled to or separated from the other resin container. The coupling portion includes a recessed portion recessed from the facing surface toward a center of the resin container, and a protruding portion protruding from the facing surface in a direction opposite to a direction in which the recessed portion is recessed. The resin containers are configured to, in a case that a plurality of the resin containers are coupled, take a loosely fitted posture in which the protruding portion of one of the resin containers is inserted into the recessed portion of another one of the resin containers in such a manner that the protruding portion is fitted into the recessed portion with a gap interposed between the protruding portion and the recessed portion, and a fitted posture in which the protruding portion is fitted into the recessed portion. The loosely fitted posture shifts to the fitted posture by the one of the resin containers being relatively rotated with respect to the other one of the resin containers about an axis in an insertion direction of the protruding portion into the recessed portion.

## Description

### TECHNICAL FIELD

The present disclosure relates to a resin container and a method for manufacturing a resin container.

### BACKGROUND ART

Patent Document 1 discloses a resin container including a coupling portion. According to Patent Document 1, two or more containers having the same shape are configured to be coupled to or separated from each other through coupling portions facing each other.

### CITATION LIST

### PATENT LITERATURE

Patent Document 1: JP 2022-542654 T
Patent Document 2: JP 4-36937 B

### SUMMARY OF INVENTION

### TECHNICAL PROBLEM

The coupling portion of Patent Document 1 is configured such that a groove formed along an up-down direction of one container engages with a projecting portion formed along the up-down direction of another container. Such a coupling portion acts to resist separation of the containers when a force to separate the containers from each other is applied in a direction different from the up-down direction. However, when a force to separate the containers from each other is applied in the up-down direction, the coupling portion is unlikely to resist the separation of the containers.

In Patent Document 2, by forming a recessed portion and a protruding portion on two resin containers, it is conceivable to couple the resin containers by fitting the protruding portion and the recessed portion of the resin containers with each other. However, since the coupling operation and the separating operation of the containers are performed many times, it is desirable that the resin containers are not deformed by the fitting. When the resin containers are deformed, neither the coupling nor the separation of the resin containers is performed with good repeatability in some cases.

An object of the present disclosure is to provide a resin container that is unlikely to be decoupled and that exhibits good repeatability of coupling and separation, and a method for manufacturing a resin container.

### SOLUTION TO PROBLEM

A resin container according to an aspect of the present disclosure includes:
a neck portion forming an inlet-outlet portion for a liquid;
a body portion connected to the neck portion; and
a bottom portion connected to the body portion and configured to close an opening of the resin container, wherein
the body portion includes a facing surface that, in a case that the resin container is coupled to or separated from another resin container, faces the other resin container,
the facing surface is provided with a coupling portion able to be coupled to or separated from the other resin container,
the coupling portion includes a recessed portion recessed from the facing surface toward a center of the resin container, and a protruding portion protruding from the facing surface in a direction opposite to a direction in which the recessed portion is recessed,
the resin containers are configured to, in a case that a plurality of the resin containers are coupled, take
a loosely fitted posture in which the protruding portion of one of the resin containers is inserted into the recessed portion of another one of the resin containers in such a manner that the protruding portion is fitted into the recessed portion with a gap interposed between the protruding portion and the recessed portion, and
a fitted posture in which the protruding portion is fitted into the recessed portion, and
the loosely fitted posture shifts to the fitted posture by the one of the resin containers being relatively rotated with respect to the other one of the resin containers about an axis in an insertion direction of the protruding portion into the recessed portion.

According to the present disclosure, it is possible to provide a resin container that is unlikely to be decoupled and that exhibits good repeatability of coupling and separation, and provide a method for manufacturing the resin container.

### BRIEF DESCRIPTION OF DRAWINGS

FIG. 1 illustrates a perspective view and a partial enlarged view of a resin container according to a first embodiment.
FIG. 2 illustrates a side view and a partial enlarged view of the resin container according to the first embodiment.
FIG. 3A is a view illustrating a state in which the resin containers according to the first embodiment are coupled to each other as an example.
FIG. 3B is a view illustrating a state in which the resin containers according to the first embodiment are coupled to each other as an example.
FIG. 3C is a view illustrating a state in which the resin containers according to the first embodiment are coupled to each other as an example.
FIG. 4 is a perspective view of a resin container according to a second embodiment.
FIG. 5 is a side view of a coupling portion according to the second embodiment.
FIG. 6 is a front view of the coupling portion according to the second embodiment.
FIG. 7 is a view illustrating a state in which the resin containers according to the second embodiment are coupled to each other as an example.
FIG. 8 is a view illustrating a state in which the resin containers according to the second embodiment are coupled to each other as an example.
FIG. 9 is a functional block diagram of an apparatus for manufacturing the resin container according to the first embodiment or the second embodiment.

### DESCRIPTION OF EMBODIMENTS

Hereinafter, a resin container will be described as a first embodiment of the present disclosure with reference to the drawings. Dimensions of the members illustrated in the drawings may be different from actual dimensions of the members for convenience of description.

For convenience of description, the expressions "up-down direction", "left-right direction", and "front-back direction" will be used as appropriate. Here, the "up-down direction" is a direction including an "upward direction" and a "downward direction". The "left-right direction" is a direction including a "leftward direction" and a "rightward direction". The "front-back direction" is a direction including a "forward direction" and a "backward direction". The reference sign "U" depicted in the drawings described below indicates an upward direction. The reference sign "D" indicates a downward direction. The reference sign "L" indicates a leftward direction. The reference sign "R" indicates a rightward direction. The reference sign "F" indicates a forward direction. **The** reference sign "B" indicates a backward direction. Unless otherwise specified, a direction in which an opening of a resin container is provided is described as an upward direction.

### First Embodiment

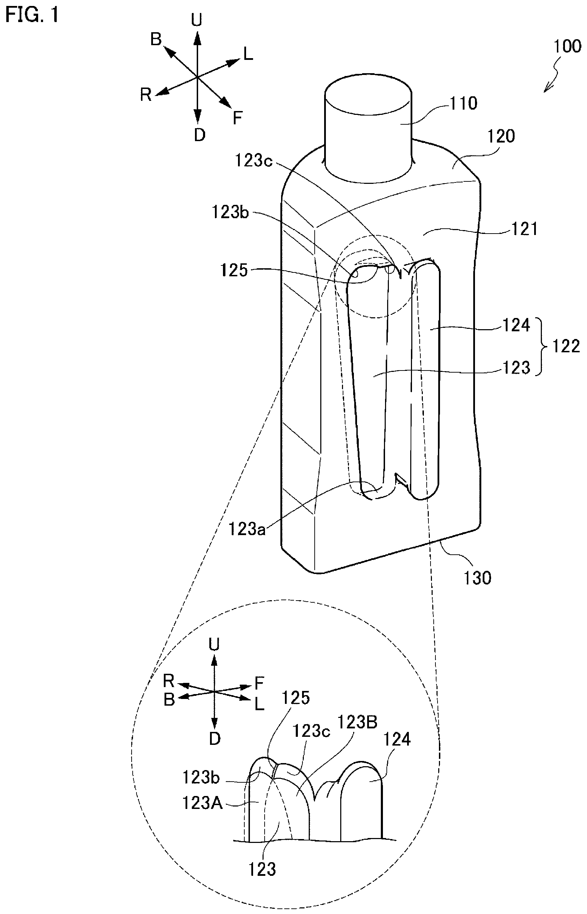

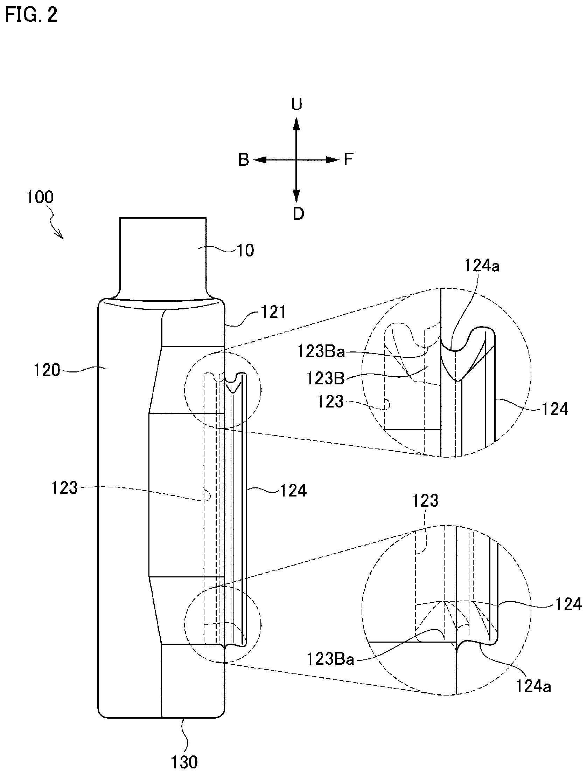

FIG. 1 illustrates a perspective view and a partial enlarged view of a resin container 100 according to a first embodiment. FIG. 2 illustrates a side view and a partial enlarged view of the resin container 100. **The** resin container 100 includes a neck portion 110, a body portion 120, and a bottom portion 130. **The** neck portion 110 forms an inlet-outlet portion for a liquid. **The** body portion 120 is connected to the neck portion 110. **The** bottom portion 130 is connected to the body portion 120. The bottom portion 130 is configured to close an opening of the resin container 100. A shoulder portion is provided between the neck portion 110 and the body portion 120. The diameter of the shoulder portion becomes larger from the lower end of the neck portion 110 in such a manner that the shoulder portion is inclined and connected to the body portion 120.

The body portion 120 has a facing surface 121 (fitting surface 121), which faces another resin container 100 when coupled to or separated from the other resin container 100. The facing surface 121 is provided with a coupling portion 122, which can be coupled to or separated from another resin container 100. The coupling portion 122 includes a recessed portion 123 and a protruding portion 124. The recessed portion 123 is recessed from the facing surface 121 toward the center of the resin container 100. Here, the expression "toward the center of the resin container 100" does not mean that the recessed portion 123 is recessed in a direction strictly along the center axis of the resin container 100. The expression "toward the center of the resin container 100" means that the recessed portion 123 is recessed in a direction substantially close to the center axis of the resin container 100. The protruding portion 124 protrudes from the facing surface 121 in a direction opposite to the direction in which the recessed portion 123 is recessed. The recessed portion 123 and the protruding portion 124 are adjacent to each other. In the adjacent portion, a side surface of the protruding portion 124 and a side surface of the recessed portion 123 are configured to be flush with each other. In addition, the side surface of the protruding portion 124 and the side surface of the recessed portion 123 in the adjacent portion have a linear shape parallel to the center axis of the resin container 100.

As exemplified in FIGS. 1 and 2, the recessed portion 123 includes a common defining portion 123a, a first defining portion 123b, and a second defining portion 123c. The common defining portion 123a is disposed on the bottom portion 130 side, and the first defining portion 123b and the second defining portion 123c are disposed on the neck portion 110 side. The first defining portion 123b has a semicircular shape, and the second defining portion 123c has a shape in which two semicircular shapes overlap each other. The second defining portion 123c is provided on the protruding portion 124 side relative to the first defining portion 123b. A recessed portion formed by the common defining portion 123a and the first defining portion 123b is referred to as a first recessed portion 123A. A recessed portion formed by the common defining portion 123a and the second defining portion 123c is referred to as a second recessed portion 123B. In this case, it is desirable that the second recessed portion 123B is formed to have a smaller area than the first recessed portion 123A.

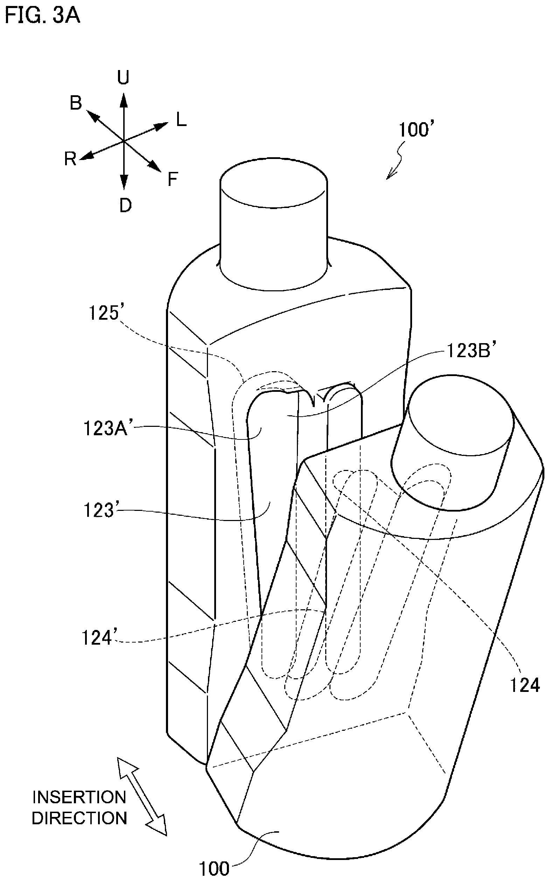

The recessed portion 123 includes a rotation suppressing portion 125 configured to suppress relative rotation of the resin container 100 about an axis in the front-back direction as the insertion direction with respect to a protruding portion 124' (see FIG. 3A) of another resin container 100' (see FIG. 3A). In the present embodiment, the rotation suppressing portion 125 is formed to separate the first defining portion 123b and the second defining portion 123c from each other. The rotation suppressing portion 125 is formed to protrude toward the center of the recessed portion 123.

As exemplified in FIG. 2, the protruding portion 124 is provided with a groove 124a, which is recessed in a direction intersecting the backward direction as the insertion direction (in the downward direction or toward the bottom portion 130 side) at a portion close to or connected to the facing surface 121. The second recessed portion 123B (more specifically, the second defining portion 123c) is provided with a projecting portion 123Ba protruding in a direction intersecting the backward direction as the insertion direction (in the downward direction or toward the bottom portion 130 side). The recessed depth of the groove 124a and the protruding height of the projecting portion 123Ba are each not needed to be uniformly provided. When the resin containers 100 are coupled to each other and are in a fitted posture described later, the groove 124a and the projecting portion 123Ba are configured to engage with each other. The groove 124a and the projecting portion 123Ba described above can be formed by adopting a movable mold component for the corresponding portions of the groove 124a and the projecting portion 123Ba in a blow molding mold (a blow cavity mold constituted by a pair of split molds and a bottom mold in contact with the blow cavity mold).

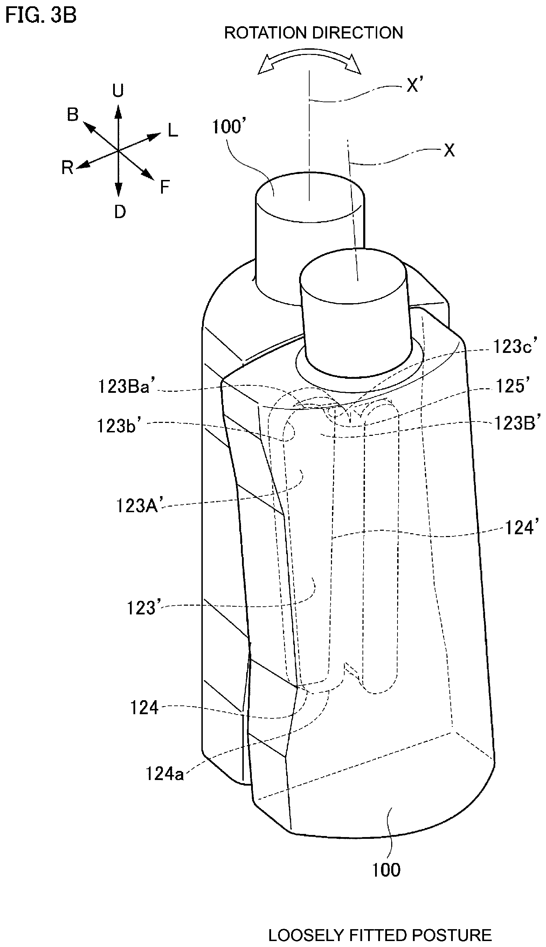

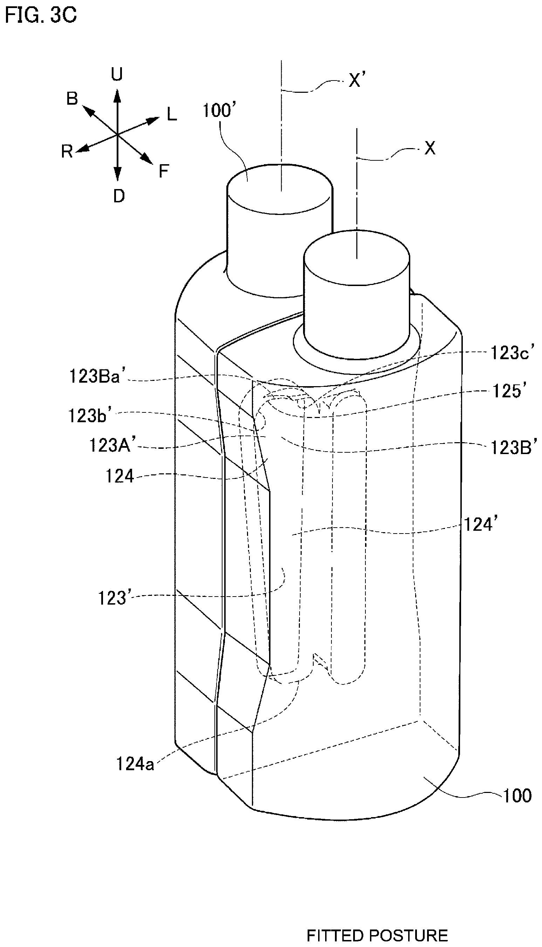

Next, the coupling of the resin containers 100 and 100' will be described. FIGS. 3A to 3C each exemplify a state in which the resin containers 100 and 100' are coupled to each other. The resin container 100 is configured to be coupled to another resin container 100' via the coupling portion 122. As illustrated in FIG. 3A, the protruding portion 124 of one resin container 100 is inserted into a recessed portion 123' in the backward direction of another resin container 100'. The backward direction is an example of the insertion direction. As illustrated in FIG. 3B, in a state where the protruding portion 124 is inserted into the recessed portion 123', the protruding portion 124 is fitted into the recessed portion 123' with a gap interposed therebetween. The resin container 100 in this state takes a loosely fitted posture. Further, when the resin containers 100 and 100' are relatively rotated about an axis in the front-back direction as the insertion direction, the loosely fitted posture shifts to the fitted posture as exemplified in FIG. 3C. In the fitted posture, the protruding portion 124 is fitted into the recessed portion 123', and the protruding portion 124 is held in such a manner as not to fall out of the recessed portion 123'. In the fitted posture, a projecting portion 123Ba' of the other resin container 100 is engaged with the groove 124a of the one resin container 100.

As exemplified in FIG. 3B, in the resin containers 100 and 100', a center axis X and a center axis X' of the two resin containers 100 and 100' are mutually twisted in the loosely fitted posture. In the fitted posture in which the resin containers 100 and 100' are relatively rotated about the axis in the front-back direction as the insertion direction, it is desirable that the center axes X and X' of the two resin containers 100 and 100' be parallel to each other.

As exemplified in FIGS. 3B and 3C, a common defining portion 123a' is in contact with the protruding portion 124 of the resin container 100 in the loosely fitted posture and the fitted posture. A first defining portion 123b' is configured to be able to contact the protruding portion 124 of another resin container 100 in the loosely fitted posture. A second defining portion 123c' is configured to be able to contact the protruding portion 124' of the other resin container 100' in the fitted posture. In the loosely fitted posture, the protruding portion 124 is fitted in a first recessed portion 123A' with a gap interposed therebetween. A second recessed portion 123B' is formed to have a smaller area than the first recessed portion 123A', and, in the fitted posture, the protruding portion 124 is accommodated in the second recessed portion 123B' in a fitted state.

When the resin containers 100 and 100' are relatively rotated to shift from the loosely fitted posture to the fitted posture, a rotation suppressing portion 125' suppresses the movement of the protruding portion 124 from the first recessed portion 123A' to the second recessed portion 123B'. When the resin containers 100 and 100' are relatively rotated to shift from the fitted posture to the loosely fitted posture, the rotation suppressing portion 125' suppresses the movement of the protruding portion 124 from the second recessed portion 123B' to the first recessed portion 123A'. The rotation suppressing portion 125' suppresses the movement of the protruding portion 124 between the first recessed portion 123A' and the second recessed portion 123B' when the resin containers 100 and 100' are attempted to be relatively rotated with a force less than a predetermined force.

As described above, when the protruding portion 124 is fitted and accommodated in the second recessed portion 123B' in the fitted posture, the groove 124a and the projecting portion 123Ba' are configured to engage with each other. With this, a situation in which the protruding portion 124 is displaced in the forward direction, which is an opposite direction to the insertion direction, is suppressed. Thus, the separation of the resin containers 100 and 100' is suppressed.

Resin containers able to be coupled of the related art are configured to be coupled by pressing two resin containers in a direction in which the two resin containers approach each other and fitting a recessed portion and a protruding portion of the two resin containers with each other. That is, the force in the direction of fitting the two resin containers and the force in the direction of detaching the two resin containers are formed in opposite directions on a straight line. However, the resin containers are easily decoupled in some cases by moving them in a direction opposite to the coupling direction. Accordingly, the configuration of the related art is insufficient to provide resin containers that are more unlikely to be decoupled. In addition, in the resin containers configured as described above, when the fitting and separating operations are repeated, the recessed portion and the protruding portion thereof may be deformed at the time of fitting, thereby making it difficult to perform the coupling and separation with repeatability in some cases.

The resin container 100 having the above-described configuration can take a loosely fitted posture and a fitted posture when the resin containers 100 and 100' are coupled to each other. When the resin containers 100 are relatively rotated about the axis in the insertion direction, the loosely fitted posture can be shifted to the fitted posture. In other words, the coupling and the separation of the resin containers 100 and 100' require rotation in a direction different from the direction in which the resin containers 100 and 100' approach each other and separate from each other. At this time, since the insertion direction is different from the rotation direction, it is difficult to separate the resin containers 100 from each other unless the resin containers 100 are rotated to shift from the fitted posture to the loosely fitted posture. With this, the resin container 100 unlikely to be decoupled is provided. In addition, compared with an operation of separating the resin containers 100 from each other by applying a force in a direction opposite to the insertion direction, the operation by rotation is an operation in which the coupling portion 122 is easily slid (easily moved) in the rotation direction and the coupling portion 122 is unlikely to be deformed, and thus, the resin container 100 exhibiting good repeatability of coupling and separation is provided.

In general, resin containers able to be coupled are often carried in a coupled state. In the resin containers 100 having the above-described configuration, the center axes X and X' of the resin containers 100 and 100' are mutually twisted in the loosely fitted posture, but the center axes X and X' of the two resin containers 100 and 100' are arranged to be parallel to each other in the fitted posture. Therefore, the resin container 100 easy to be carried in the coupled state is provided.

The resin container 100 having the above-described configuration is provided with the rotation suppressing portion 125, and relative rotation of the resin containers 100 and 100' is suppressed by the rotation suppressing portion 125. Even in a case where the resinous containers 100 and 100' are attempted to be relatively rotated with a force less than a predetermined force, the resin containers 100 and 100' are unlikely to be shifted from the fitted posture to the loosely fitted posture, and thus unintended decoupling of the resin containers 100 and 100' is unlikely to occur.

In the resin container 100 having the above-described configuration, the second recessed portion 123B is formed to have a smaller area than the first recessed portion 123A. This makes it possible to easily realize a configuration of the resin container 100 in such a manner that while the protruding portion 124' of another resin container 100' is easily inserted into the first recessed portion 123A in the loosely fitted posture, the decoupling is unlikely to occur in the fitted posture.

The resin container 100 having the above-described configuration is configured in such a manner that the groove 124a of the protruding portion 124 and the projecting portion 123Ba' of the recessed portion 123' are engaged with each other in the fitted posture. With this, the resin containers 100 and 100' are unlikely to be decoupled.

### Second Embodiment

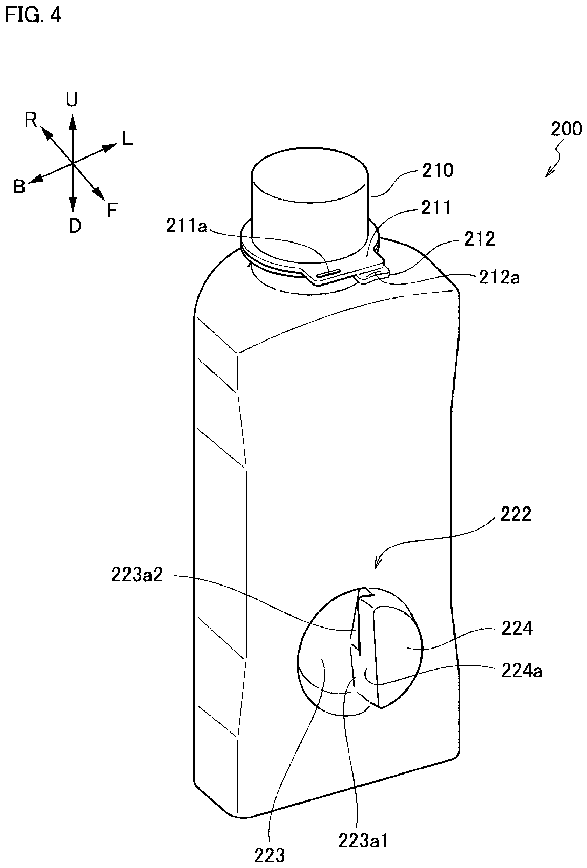

Next, a resin container 200 according to a second embodiment will be described. FIG. 4 is a perspective view of the resin container 200 according to the second embodiment. The resin container 200 also includes a coupling portion 222 constituted by a protruding portion 224 and a recessed portion 223, but the shape of the coupling portion 222 is different from that of the coupling portion 122 of the resin container 100 of the first embodiment.

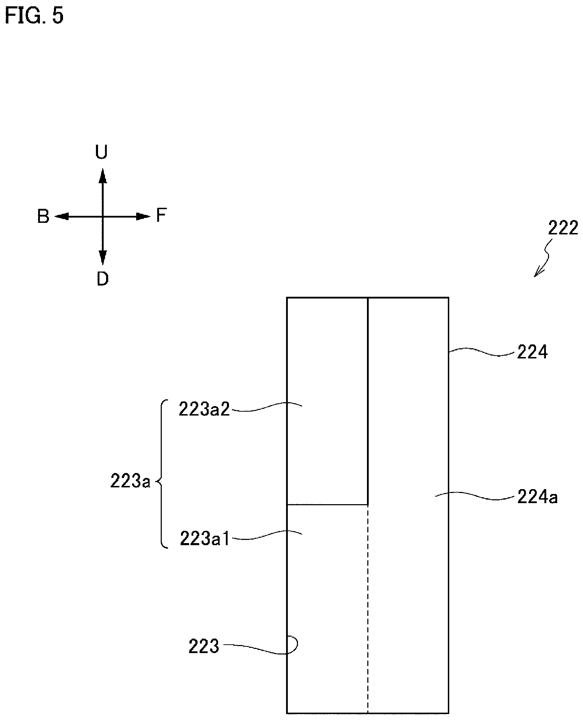

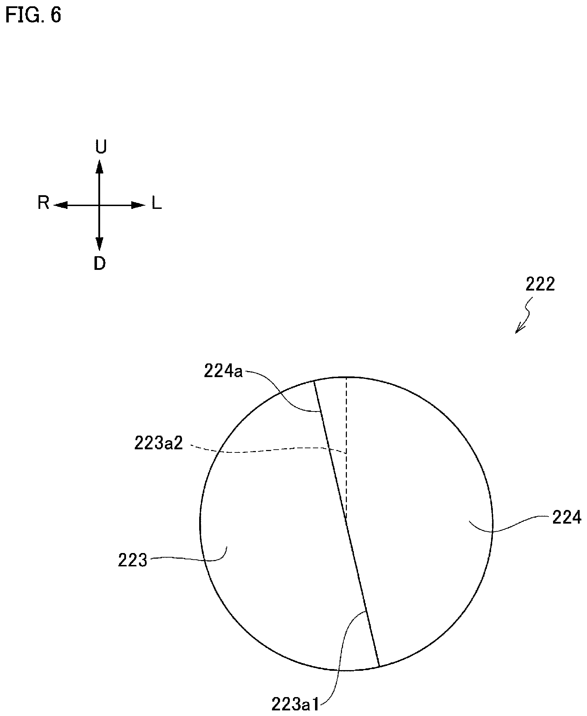

FIG. 5 is a side view of the coupling portion 222 of the resin container 200. FIG. 6 is a front view of the coupling portion 222 of the resin container 200. As exemplified in FIGS. 4 to 6, the recessed portion 223 and the protruding portion 224 are provided adjacent to each other on a facing surface of a body portion of the resin container 200. The shape of the recessed portion 223 and the shape of the protruding portion 224 are each a semicircular shape with the adjacent side being a straight line in a front view (when viewed from the facing surface). The recessed portion 223 includes a recessed portion side surface 223a on a side adjacent to the protruding portion 224. The recessed portion side surface 223a is flush with a protruding portion side surface 224a of the protruding portion 224, and includes a main surface 223a1 for defining a loosely fitted posture and a depressed portion 223a2 for defining a fitted posture. In a front view, the main surface 223a1 is disposed on a bottom portion side and the depressed portion 223a2 is disposed on a neck portion side relative to the center (midpoint) of the protruding portion side surface 224a (straight line). The depressed portion 223a2 is configured so as to not be visible in the front view due to the protruding portion 224. That is, the depressed portion 223a2 is inclined from the upper end of the main surface 223a1 toward the protruding portion 224 side and is disposed at a rear side of the protruding portion 224. The above-discussed depressed portion 223a2 can be formed by adopting a movable mold component for the corresponding portion of the depressed portion 223a2 in a blow molding mold. In the front view, the protruding portion side surface 224a (straight line) is configured to be inclined with respect to the center axis of the resin container 200 or the depressed portion 223a2 (straight line).

As illustrated in FIG. 4, a neck portion 210 of the resin container 200 is provided with a first flange 211 and a second flange 212. The first flange 211 and the second flange 212 are provided to have different heights from each other. In the present embodiment, the second flange 212 is provided below the first flange 211. A through hole 211a is formed in the first flange 211. A projection 212a is formed on the second flange 212. In the present embodiment, the projection 212a projects upward from the second flange. The projection 212a is configured to be insertable into the through hole 211a. The shapes of the first flange 211 and the second flange 212 are defined by an injection molding mold (a neck mold constituted by a pair of split molds and an injection cavity mold in contact with the neck mold) when a preform is produced in an injection molding step.

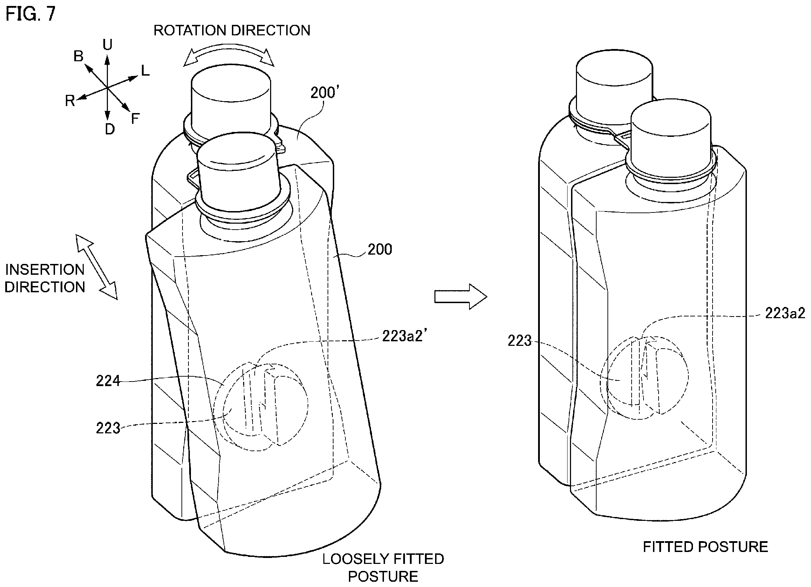

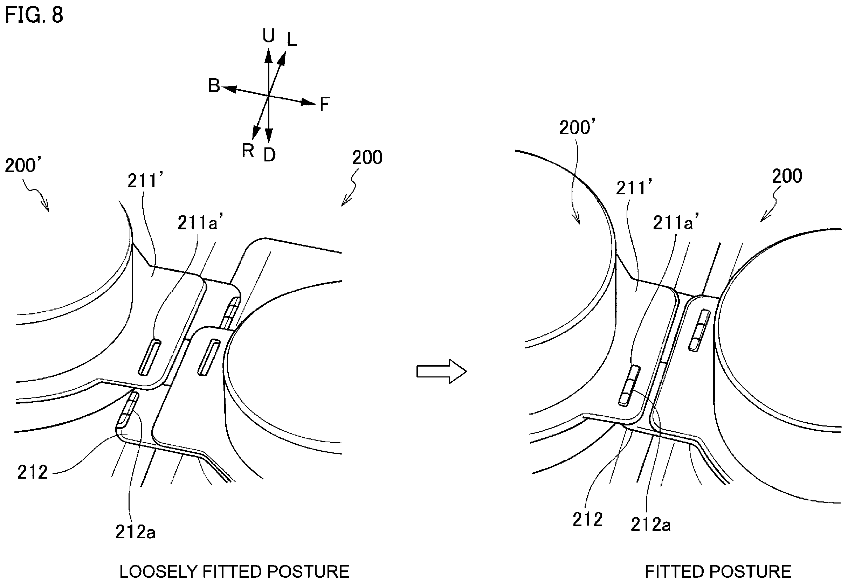

FIGS. 7 and 8 each illustrate a state in which the resin containers 200 are coupled to each other. The resin container 200 of the present embodiment is also configured to be able to take a loosely fitted posture and a fitted posture. That is, the protruding portion 224 of the resin container 200 is fitted into a recessed portion 223' of another resin container 200' with a gap interposed therebetween in the loosely fitted posture, and, in the fitted posture, is fitted to the other resin container 200'. The shift from the loosely fitted posture to the fitted posture is performed by relatively rotating the resin containers 200 and 200' about an axis in the insertion direction.

In the fitted posture, a depressed portion 223a2' of one resin container 200' is configured to engage with the protruding portion 224 of another resin container 200. This suppresses separation of the resin containers 200 and 200' from each other in the opposite direction to the insertion direction.

Further, as for a first flange 211' and the second flange 212 provided on the neck portion 210, the projection 212a is not accommodated in a through hole 211a' in the loosely fitted posture. However, in the fitted posture, the projection 212a is inserted and accommodated in the through hole 211a'.

As described above, the resin container 200 according to the second embodiment can also take the loosely fitted posture and the fitted posture, and can be shifted from the loosely fitted posture to the fitted posture by relatively rotating the resin containers 200 and 200' about the axis in the insertion direction. Thus, the resin container 200 unlikely to be decoupled and able to perform coupling and separation with high repeatability can be realized.

The neck portion 210 of the resin container 200 of the second embodiment is provided with the first flange 211 and the second flange 212. In the fitted posture, the projection 212a formed on the second flange 212 is configured to be insertable into the through hole 211a' formed in the first flange 211' of the other resin container 200'. This makes it possible to suppress separation of the resin containers 200 and 200' from each other in the separation direction or shifting of the resin containers 200 and 200' from the fitted posture to the loosely fitted posture at an unintended timing.

The resin containers 200 and 200' are configured such that the depressed portion 223a2 and a protruding portion 224' are engaged with each other in the fitted posture. This makes it possible to suppress a situation in which the resin containers 200 and 200' are separated from each other in the opposite direction to the insertion direction. Further, since the structure for engaging with a contact surface between the protruding portion 224' and the recessed portion 223 is provided, the depressed portion 223a2 as the structure for engagement is small, so that the configuration of the mold in the blow molding can be easily simplified.

### Description of Manufacturing Apparatus and Manufacturing Method

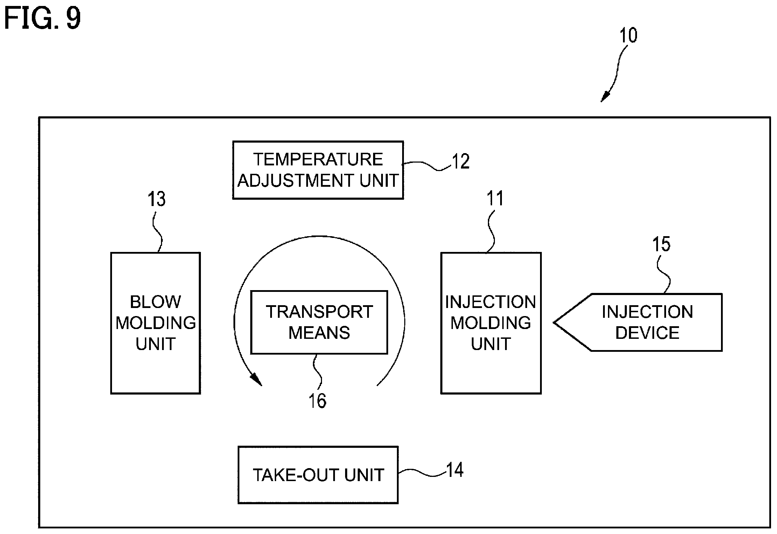

A manufacturing apparatus 10 and a manufacturing method for manufacturing the resin containers 100 and 200 will be described with reference to FIG. 9. FIG. 9 is a functional block diagram of the manufacturing apparatus 10.

As exemplified in FIG. 9, the manufacturing apparatus 10 includes an injection molding unit 11 for manufacturing a bottomed preform, and a temperature adjustment unit 12 for adjusting the temperature of the manufactured preform. An injection device 15 configured to supply a resin material as a raw material is connected to the injection molding unit 11. The manufacturing apparatus 10 also includes a blow molding unit 13 for manufacturing a container by blowing the preform, and a take-out unit 14 for taking out the manufactured container. The manufacturing apparatus 10 is a hot parison type (one step type) blow molding apparatus that manufactures the resin containers 100 and 200 by utilizing residual heat (heat quantity) remaining in the preform after injection molding.

The injection molding unit 11, the temperature adjustment unit 12, the blow molding unit 13, and the take-out unit 14 are provided at positions each rotated by a predetermined angle (90 degrees in the present embodiment) centered on a transport means 16. The transport means 16 is constituted by a rotating plate or the like. Neck molds are attached to the lower surface of the rotating plate at positions corresponding to the respective units. The preform or the resin container 100 or 200, in which the neck portion is supported by the neck mold, is transported to each unit with the rotation of the rotating plate.

The injection molding unit 11 exemplified in FIG. 9 carries out an injection molding step of the preform, and includes an injection cavity mold, an injection core mold, a neck mold constituted by a pair of split molds, and the like (not illustrated). The injection cavity mold defines the outer surface shape of the body and bottom portions of the preform. The injection core mold defines the inner surface shapes of the neck portion (the neck portion 110, 210 of the resin container 100, 200), the body portion, and the bottom portion of the preform. The neck mold defines the outer surface shape of the neck portion (the neck portion 110, 210 of the resin container 100, 200) of the preform. The bottomed preform is manufactured by pouring a molten resin material (e.g., a thermoplastic resin such as polyethylene terephthalate (PET)) from the injection device 15 into a preform-shaped molding space (cavity) formed by clamping the molds. The preform has an optimal wall thickness distribution (shape) in accordance with the container, and the thickness (average thickness, wall thickness) of the body portion is set to, for example, from 1.0 to 8.0 mm, and preferably from 2.0 to 4.0 mm. The manufactured preform is transported to the temperature adjustment unit 12 while having residual heat.

In the case of manufacturing the resin container 200 of the second embodiment, a molding space for forming the first flange 211 and the second flange 212 is provided on at least one or both of the lower surface of the neck mold and the upper surface of the injection cavity mold. With this, the first flange 211 and the second flange 212 having high dimensional accuracy and good fitting performance are formed in the injection molding unit 11.

The temperature adjustment unit 12 carries out a temperature adjustment step for adjusting the temperature of the injection-molded preform to a temperature suitable for blow molding, and includes a temperature adjustment mold (not illustrated). The temperature adjustment unit removes or reduces a temperature deviation in the preform derived from the injection molding, and imparts, to the preform, a temperature distribution suitable for the resin container 100, 200. The temperature-adjusted preform is transported to the blow molding unit 13.

The blow molding unit 13 carries out a blow molding step for shaping the temperature-adjusted preform into the resin container 100, 200, and includes a stretching rod, a blow core mold, a blow cavity mold constituted by a pair of split molds, a bottom mold, and the like (not illustrated). The blow cavity mold includes a molding space that defines the outer surface shape of the shoulder portion and the body portion of the resin container 100, 200 and a molding space that defines the outer surface diameter shape of the coupling portion 122, 222. The bottom mold defines the outer surface shape of the bottom portion of the resin container 100, 200.

In the case of manufacturing the resin container 100 of a first example, a movable mold component for forming the groove 124a of the protruding portion 124 and the projecting portion 123Ba of the second recessed portion 123B (second defining portion 123c) is provided in the blow cavity mold. **In** the case of manufacturing the resin container 200 of a second example, a movable mold component for forming the depressed portion 223a2 is provided in the blow cavity mold.

In the blow molding unit 13, the following steps are carried out. After the preform is transported to the blow cavity mold in a mold-open state, the blow cavity mold is closed to accommodate the preform in the blow cavity mold. At about the same time, the bottom mold is raised from a standby position to a molding position, the blow core mold is lowered from a standby position thereof to come into contact with the neck portion of the preform, and the stretching rod is lowered from a standby position to be inserted into the preform. At this time (at the time point before the preform is expanded), the movable mold component is not driven and is kept at a standby position (retracted position). Subsequently, the stretching rod is lowered to stretch the preform in the longitudinal axis direction, and air is introduced into the preform from the blow core mold to stretch (expand) the preform in the lateral axis direction. When the preform reaches the cavity surface of the coupling portion, the movable mold component is driven to move (advance) to the shaping position, thereby forming the groove 124a and the projecting portion 123Ba, or the depressed portion 223a2. After the formation of these portions is completed, the movable mold component is returned to the standby position. When the manufacture of the resin container 100, 200 is completed, the blow cavity mold is opened to release the resin container 100, 200 from the mold, and then the bottom mold, the blow core mold, and the stretching rod are returned to their standby positions. The blow-molded resin container 100, 200 is transported to the take-out unit 14.

The take-out unit 14 carries out a take-out step for taking out the resin container 100, 200 from the manufacturing apparatus 10 to the outside. When the take-out unit 14 opens the neck mold and releases the neck portion 110, 210 from the neck mold, the resin container 100, 200 is detached to fall out from the manufacturing apparatus 10, thereby discharging (taking out) the resin container 100, 200 to the outside.

The embodiments of the present disclosure have been described thus far, but it is needless to say that the technical scope of the present disclosure should not be interpreted in a limited manner by the description of the embodiments. The present embodiments are merely examples, and it is understood by those skilled in the art that various modifications of the embodiments are possible within the scope of the invention described in the claims. The technical scope of the present disclosure should be determined based on the scope of the invention described in the claims and the scope of equivalents thereof.

For example, in the second embodiment, the resin container that includes the first flange provided with the through hole and the second flange provided with the projection is exemplified, but the resin container in the first embodiment may be configured to include the first flange and the second flange mentioned above.

The resin containers of the first embodiment and the second embodiment may be manufactured by a blow molding apparatus of a hot parison type (one step method, an injection stretch blow molding method) as disclosed in FIG. 1 of Japanese Patent No. 6505344, for example. Further, it is desirable that the above-described blow molding apparatus at least includes an injection device, an injection molding unit provided with an injection molding mold, and a blow molding unit provided with a blow molding mold. Further, a temperature adjustment unit configured to adjust a temperature distribution of a preform may be provided between the injection molding unit and the blow molding unit, and a take-out unit may be provided between the blow molding unit and the injection molding unit.

This application is based on Japanese Patent Application (JP 2022-197985) filed on Dec. 12, 2022, the contents of which are incorporated herein by reference.

### REFERENCE SIGNS LIST

100, 200 Resin container
110, 210 Neck portion
120 Body portion
121 Facing surface (Fitting surface)
122, 222 Coupling portion
123, 223 Recessed portion
123a Common defining portion
123A First recessed portion
123b First defining portion
123B Second recessed portion
123Ba Projecting portion
123c Second defining portion
124, 224 Protruding portion
124a Groove
125 Rotation suppressing portion
130 Bottom portion
211 First flange
211a Through hole
212 Second flange
212a Projection
223a Recessed portion side surface
223a1 Main surface
223a2 Depressed portion
224a Protruding portion side surface

## Claims

1. A resin container comprising:
a neck portion forming an inlet-outlet portion for a liquid;
a body portion connected to the neck portion; and
a bottom portion connected to the body portion and configured to close an opening of the resin container, wherein
the body portion includes a facing surface that, in a case that the resin container is coupled to or separated from another resin container, faces the other resin container,
the facing surface is provided with a coupling portion able to be coupled to or separated from the other resin container,
the coupling portion includes a recessed portion recessed from the facing surface toward a center of the resin container, and a protruding portion protruding from the facing surface in a direction opposite to a direction in which the recessed portion is recessed,
the resin containers are configured to, in a case that a plurality of the resin containers are coupled, take
a loosely fitted posture in which the protruding portion of one of the resin containers is inserted into the recessed portion of another one of the resin containers in such a manner that the protruding portion is fitted into the recessed portion with a gap interposed between the protruding portion and the recessed portion, and
a fitted posture in which the protruding portion is fitted into the recessed portion, and
the loosely fitted posture is shifted to the fitted posture by the one of the resin containers being relatively rotated with respect to the other one of the resin containers about an axis in an insertion direction of the protruding portion into the recessed portion.

2. **The** resin container according to claim 1, wherein
in the loosely fitted posture, center axes of the two resin containers are mutually twisted, and
in the fitted posture, the center axes of the two resin containers are parallel to each other.

3. **The** resin container according to claim 1, wherein
the recessed portion includes a rotation suppressing portion configured to suppress relative rotation of the resin containers about the axis in the insertion direction with respect to the protruding portion of the other resin container.

4. The resin container according to claim 1, wherein
the neck portion includes a first flange and a second flange formed to extend toward the coupling portion side,
the first flange and the second flange are provided to have different heights from each other,
a through hole is formed in the first flange,
a projection is formed on the second flange, and
in the fitted posture, the projection formed on the one resin container is configured to be insertable into the through hole formed in the other resin container.

5. The resin container according to any one of claims 1 to 4, wherein
the recessed portion includes a common defining portion that comes into contact with the protruding portion of the other resin container in the loosely fitted posture and the fitted posture, a first defining portion configured to come into contact with the protruding portion of the other resin container in the loosely fitted posture, and a second defining portion that is provided on the protruding portion side relative to the first defining portion and configured to come into contact with the protruding portion of the other resin container in the fitted posture, and
in a case that the recessed portion constituted by the common defining portion and the first defining portion is defined as a first recessed portion and the recessed portion constituted by the common defining portion and the second defining portion is defined as a second recessed portion, the second recessed portion has a smaller area than the first recessed portion.

6. The resin container according to claim 5, wherein
the protruding portion is provided with a groove that is recessed in a direction intersecting the insertion direction,
the second recessed portion is provided with a projecting portion protruding in the direction intersecting the insertion direction, and
in a case that the resin containers are coupled to be in the fitted posture, the groove and the projecting portion are engaged with each other to suppress separation of the resin containers.

7. The resin container according to any one of claims 1 to 4, wherein
the recessed portion includes a recessed portion side surface adjacent to the protruding portion,
the recessed portion side surface includes a main surface that is flush with a protruding portion side surface of the protruding portion and defines the loosely fitted posture, and a depressed portion that defines the fitted posture, and
in the fitted posture, the depressed portion of the one resin container is configured to engage with the protruding portion of the other resin container to suppress separation of the resin containers from each other in a direction opposite to the insertion direction.

8. A method for manufacturing the resin container according to claim 1, the method comprising:
causing a blow molding apparatus to manufacture the resin container, the blow molding apparatus including at least an injection molding unit provided continuous with an injection device and configured to injection-mold a bottomed preform made of resin, and a blow molding unit configured to blow-mold the preform.
